# EUROPÄISCHE PATENTSCHRIFT

(11) **EP 1 102 233 B1**
(45) Veröffentlichungstag und Bekanntmachung des Hinweises auf die Patenterteilung: **24.06.2009**
(21) Anmeldenummer: 00123452.5
(22) Anmeldetag: 06.11.2000
(51) Int. Cl.: G09G 3/16

(54) **Elektronische Einrichtung mit einer Anzeigeeinheit**
Electronic device with a display element
Dispositif électronique avec un écran de visualisation

(30) Priorität: 22.11.1999 DE 19956109
(43) Veröffentlichungstag der Anmeldung: 23.05.2001
(73) Patentinhaber: Continental Automotive GmbH, 30165 Hannover (DE)
(72) Erfinder: Völkel, Andreas, 35619 Braunfels (DE)

(56) Entgegenhaltungen:
- WO-A-97/03432
- WO-A-98/09433
- WO-A-99/53472
- GB-A- 2 322 219
- US-A- 5 384 168
- US-A- 5 598 565
- US-A- 5 818 553
- PATENT ABSTRACTS OF JAPAN vol. 2000, no. 01, 31. Januar 2000 (2000-01-31) & JP 11 295697 A (SEIKO EPSON CORP), 29. Oktober 1999 (1999-10-29)
- PATENT ABSTRACTS OF JAPAN vol. 1996, no. 06, 28. Juni 1996 (1996-06-28) & JP 08 043811 A (HITACHI LTD;OTHERS: 01), 16. Februar 1996 (1996-02-16)

## Beschreibung

Die Erfindung betrifft eine elektronische Einrichtung mit einer optischen Anzeigeeinheit, die mehrere Anzeigebereiche aufweist, einer Bedieneinheit, Mitteln zur Verarbeitung von Eingabebefehlen, die über die Bedieneinheit eingegeben werden, sowie Mitteln zur Ansteuerung der Anzeigeeinheit, wobei weiterhin Mittel zur Bestimmung der Zeitdauer seit der letzten Betätigung der Bedieneinheit und zum Vergleich dieser Zeitdauer mit einem Vorgabewert sowie Mittel zur automatischen Veränderung des Kontrasts einzelner, weniger wichtigen Anzeigebereiche der Anzeigeeinheit vorhanden sind und die automatische Veränderung des Kontrasts einzelner Anzeigebereiche der Anzeigeeinheit in Abhängigkeit vom Ergebnis des Vergleichs der Zeitdauer seit der letzten Betätigung der Bedieneinheit mit dem Vorgabewert erfolgt.

Derartige elektronische Einrichtungen sind aus der WO 99/53472 A und US-A-5598565 bekannt. Die Veränderung des Kontrasts erfolgt dort in Form einer Helligkeitsveränderung zur Reduzierung des Energieverbrauchs batteriebetriebener Geräte.

Bei einem Navigationssystem ist es bekannt, die Helligkeit der optischen Anzeigeeinheit zu verändern, um sowohl am Tage als auch bei Fahrten in der Nacht eine optimale Informationsdarstellung zu erzielen. Beispielsweise kann vorgesehen sein, die Helligkeit der Anzeige mit Einschalten des Fahrlicht auf ein niedrigeres Niveau zu reduzieren. Es ist jedoch auch möglich, einen separaten Sensor vorzusehen, der die Intensität des Umgebungslichtes registriert und bei Unterschreiten eines Schwellwertes die Helligkeit der Anzeige reduziert.

Aus der US 5,617,112 ist eine Anzeigeeinheit bekannt, die einen Lichtsensor zu Detektion der Intensität des Umgebungslichtes aufweist. Abhängig vom Signal dieses Lichtsensors werden unterschiedliche Helligkeitsniveaus der Anzeigeeinheit eingestellt. Der Übergang zwischen den Helligkeitsniveaus erfolgt dabei derart, dass die Änderungsgeschwindigkeit an die Änderungsgeschwindigkeit des Öffnungsgrades der menschlichen Pupille angepasst ist.

Bei den bekannten Anzeigeeinheiten erfolgt somit eine Anpassung der Helligkeit der Anzeige im wesentlichen zur Unterscheidung zwischen einem Tag- und Nachtbetrieb und damit zur Anpassung an die Intensität des Umgebungslichtes.

Gerade bei elektronischen Einrichtungen mit einer optischen Anzeigeeinheit, die in Verkehrsmitteln wie Kraftfahrzeugen, Flugzeugen oder Bahnen eingesetzt werden, können auf der Anzeigeeinheit unterschiedliche Informationen dargestellt sein. Von diesen Informationen ist häufig lediglich ein geringer Teil ständig für den Fahrer von Interesse. Andere Informationen werden dagegen nur vorübergehend benötigt oder dienen der Auswahl bestimmter Funktionen der elektronischen Einrichtung.

Aufgabe der Erfindung ist es daher, eine gattungsgemäße elektronische Einrichtung derart weiterzubilden, dass der unterschiedlichen Bedeutung der Informationen in verschiedenen Anzeigebereichen der Anzeigeeinheit insbesondere bei Nachtbetrieb Rechnung getragen wird.

Die Aufgabe wird durch ein elektronisches Gerät mit den Merkmalen des Anspruchs 1 gelöst.

Insbesondere erfolgt die automatische Veränderung des Kontrasts einzelner Anzeigebereiche nur bei eingeschaltetem Fahrlicht des Kraftfahrzeuges. In diesem Fall wird bei einer Nachtfahrt beispielsweise eine Überflutung des Fahrers mit zu vielen optischen Reizen vermindert. Weiterhin kann die erfindungsgemäße Veränderung des Kontrasts einzelner Anzeigebereiche auch mit einer generellen Veränderung der Helligkeit der Anzeige in Abhängigkeit vom Umgebungslicht bzw. der Tageszeit erfolgen.

Dabei kann generell eine Reduzierung des Kontrasts einzelner Anzeigebereiche durch Annähern der Helligkeit oder der Farbe der dargestellten Zeichen, Symbole oder dgl. an die Helligkeit oder Farbe des Hintergrundes erreicht werden Bei der erfindungsgemäßen Einrichtung ist somit nicht wie beim Vorbekannten lediglich eine Änderung der Helligkeit der gesamten Anzeigeeinheit zur Anpassung an den Tag- oder Nachtbetrieb vorgesehen. Vielmehr ist vorgesehen, dass der Kontrast einzelner Bereiche, die beispielsweise während der Fahrt von untergeordnetem Interesse sind, automatisch verändert wird. Als Kriterium hierfür wird die Zeitdauer seit der letzten Betätigung der Bedieneinheit herangezogen. Diese Zeitdauer wird mit einem Vorgabewert verglichen. Übersteigt die Zeitdauer seit der letzten Betätigung der Bedieneinheit den Vorgabewert, so wird der Kontrast einzelner Anzeigebereiche der Anzeigeeinheit verändert. In der Regel wird hierbei der Kontrast von weniger wichtigen Anzeigebereichen reduziert.

Handelt es sich bei der elektronischen Einrichtung beispielsweise um einen Bordcomputer eines Kraftfahrzeuges, so kann nach Ablauf einer bestimmten Zeitspanne der Kontrast des Bereichs, in dem der Wochentag oder das Datum ausgegeben wird, reduziert werden, da diese Informationen vom Fahrer nicht fortlaufend benötigt werden.

Im Falle eines Navigationssystems können auf der Anzeigeeinheit beispielsweise eine Kartendarstellung mit der aktuellen Fahrzeugposition, Fahrtrichtungshinweise sowie weitere Bereiche vorhanden sein, bei deren Anwahl über die Bedieneinheit zusätzliche Informationen ausgegeben werden oder der Zielort eingegeben werden kann. Auch diese letztgenannten Funktionen werden während der Fahrt nicht ständig benötigt, während andererseits die Kartendarstellung und/oder die Anzeige der Fahrtrichtungshinweise von ständigem Interesse für den Fahrer ist. Um insbesondere bei Nachtfahrten eine bessere Unterscheidung für den Fahrer zwischen diesen für ihn ständig wichtigen und den weniger interessierenden Bereichen zu erhalten, kann erfindungsgemäß der Kontrast der letztgenannten nach Ablauf einer bestimmten Zeitdauer nach einer Eingabe über die Bedieneinheit automatisch reduziert werden.

In einer weiteren Ausbildung der Erfindung ist vorgesehen, daß nach einem erneuten Betätigen der Bedieneinheit automatisch eine Erhöhung des Kontrasts der Anzeigebereiche erfolgt, deren Kontrast zuvor reduziert wurde. Hierdurch ist es möglich, jederzeit wieder eine klare und deutliche Erkennbarkeit aller Anzeigebereiche zu erhalten. Will der Fahrer beispielsweise bei einem Navigationssystem einen neuen Zielort eingeben, so werden durch Betätigung einer Taste der Bedieneinheit beispielsweise die entsprechenden zuvor abgedunkelten Anzeigebereiche wieder auf normale Helligkeit gegenüber einem dunkleren Hintergrund angehoben, so daß eine gute Lesbarkeit der relevanten Informationen auf der Anzeigeeinheit gewährleistet ist.

Die Änderung des Kontrasts einzelner Anzeigebereiche kann auf verschiedene Weise erfolgen, abhängig von der Darstellungsart der Anzeigeeinheit. Bei der Darstellung von Zeichen oder Symbolen auf Anzeigeeinheiten, die beispielsweise als LCD-Anzeigen ausgebildet sein können, wird im allgemeinen zwischen Negativ- und Positivdarstellung unterschieden. Bei der Positivdarstellung sind die dargestellten Zeichen und Symbole dunkler als der Hintergrund der Anzeigeeinheit. Bei der Negativdarstellung ist es umgekehrt. Daraus ergibt sich, daß bei einer Anzeigeeinheit mit Positivdarstellung eine Reduzierung des Kontrasts dadurch erreicht werden kann, daß die Helligkeit der Zeichen oder Symbole erhöht und damit der Hintergrundhelligkeit angepaßt wird. Bei einer Anzeigeeinheit mit Negativdarstellung wird dagegen zur Reduzierung des Kontrasts die Helligkeit der Zeichen und Symbole reduziert werden und sich der geringeren Helligkeit des Hintergrunds annähern. Eine Anzeigeeinheit kann sowohl Bereiche mit Positiv- als auch mit Negativdarstellung aufweisen. Eine Reduzierung des Kontrasts kann daher prinzipiell auch dadurch erfolgen, daß die Helligkeit des Hintergrunds einzelner Anzeigebereiche an die Helligkeit der Zeichen und Symbole in diesem Anzeigebereich angepaßt wird.

Bei Anzeigeeinheiten mit farbiger Darstellung von Zeichen und Symbolen auf einem andersfarbigen Hintergrund ist es darüber hinaus möglich, den Kontrast durch eine Farbänderung des Hintergrundes oder der Zeichen oder Symbole zu verändern. Erfolgt beispielsweise die Darstellung der Zeichen oder Symbole im Normalbetrieb in roter Farbe auf einem blauen Hintergrund, so kann zur Reduzierung des Kontrasts die Darstellung der Zeichen oder Symbole in einem Blauton erfolgen, der sich nur wenig vom Hintergrund unterscheidet. In diesem Falle erfolgt die Reduzierung des Kontrasts alleine über eine Farbänderung ohne Änderung der Helligkeit. Weiterhin sind zur Reduzierung des Kontrasts auch Kombinationen von Farb- und Helligkeitsänderungen möglich.

In den nachfolgenden Ausführungen wird zur Vereinfachung im wesentlichen von einer monochromen Anzeigeeinheit mit Negativdarstellung ausgegangen, ohne daß hierin eine Beschränkung zu sehen ist.

Um eine Irritierung des Fahrers durch eine plötzliche Änderung der Helligkeit einzelner Anzeigebereiche auszuschließen, ist in einer besonderen Ausführungsform vorgesehen, daß die Reduzierung und/oder die Erhöhung der Helligkeit bzw. des Kontrasts allmählich erfolgt, beispielsweise wie in der US 5,617,112 beschrieben. Zur Anpassung an die Fähigkeiten des menschlichen Auges kann dies insbesondere derart erfolgen, daß die Reduzierung der Helligkeit langsamer erfolgt als die Erhöhung der Helligkeit.

Bei den erfindungsgemäß mit geringerem Kontrast dargestellten Anzeigebereichen kann es sich je nach Art der elektronischen Einrichtung um Bereiche unterschiedlichster Funktion handeln. Beispielsweise können diese Anzeigebereiche Auswahlmenüs oder Eingabefelder enthalten. Im Falle eines Navigationssystems ist es insbesondere weiterhin auch möglich, Straßen einer untergeordneten Kategorie, die für die Orientierung von geringerem Interesse sind, in der Kartendarstellung in der Helligkeit automatisch zu reduzieren. Beispielsweise können hierbei bei einer reinen Autobahnfahrt untergeordnete Straßen, die keine Autobahnen sind, automatisch mit geringerer Helligkeit dargestellt werden.

Ein Verfahren zur Steuerung des Kontrasts einzelner Bereiche einer Anzeigeeinheit mit mehreren Anzeigebereichen zur Darstellung von Informationen weist die folgenden Verfahrensschritte auf:
- Starten eines Zeitgebers nach Abschluss eines Bedienvorgangs an einer mit der Anzeigeeinheit unmittelbar oder mittelbar verbundenen Bedieneinheit,
- Vergleichen des Zeitgebersignals mit einem Vorgabewert
- Reduzieren des Kontrasts einzelner Anzeigebereiche der Anzeigeeinheit, wenn das Zeitgebersignal den Vorgabewert überschreitet.

Die Erfindung wird nachfolgend anhand der Zeichnung und eines Ausführungsbeispiels mit einer Anzeigeeinheit mit Negativdarstellung näher erläutert. Es zeigen:
- Figur 1: die Komponenten eines Navigationssystems für Kraftfahrzeuge
- Figur 2: die Anzeigeeinheit eines solchen Navigationssystems
- Figur 3: einen Ablaufplan einer Ausführungsform des erfindungsgemäßen Verfahrens
- Figur 4: die zeitliche Änderung der Helligkeit einzelner Anzeigebereiche

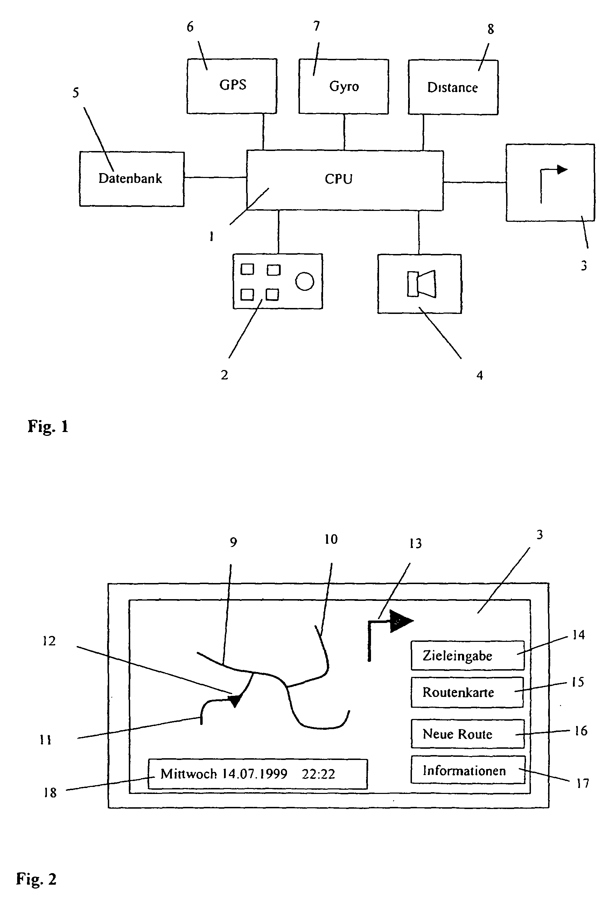

In Figur 1 sind die Komponenten eines Navigationssystems für Kraftfahrzeuge schematisch dargestellt. Zentraler Bestandteil des Navigationssystems ist die Recheneinheit (CPU) 1. Mit der CPU 1 ist eine Bedieneinheit 2 verbunden, über die beispielsweise der Zielort eingegeben oder ausgewählt werden kann. Die Bedieneinheit 2 kann im gleichen Gehäuse wie die CPU 1 untergebracht sein, jedoch kann die Bedieneinheit 2 auch als Fernbedienung ausgebildet sein, die mit der CPU 1 beispielsweise über eine optische Schnittstelle oder eine Funkschnittstelle in Verbindung steht. Mit der CPU 2 ist eine optische Ausgabeeinheit 3 verbunden, über die Zielführungsinformationen und sonstige Informationen ausgegeben werden. Die Zielführungsinformationen können weiterhin über einen Lautsprecher 4 akustisch ausgegeben werden. Die CPU 1 ist ferner mit einer Datenbank 5 verbunden, die die Landkartendaten enthält. Die Landkartendaten sind beispielsweise auf einer CD-ROM abgespeichert. In diesem Falle enthält das Navigationssystem ein CD-ROM-Laufwerk, das mit der CPU 1 verbunden ist. Anhand der Landkartendaten kann von der CPU 1 bei bekanntem Start- und Zielort in bekannter Weise eine Berechnung der optimalen Route durchgeführt werden, die dann über die optische Ausgabeeinheit 3 ausgegeben werden kann. Zur Bestimmung der aktuellen Fahrzeugposition enthält das Navigationssystem ferner einen Empfänger 6 zum Empfang von Satellitennavigationssignalen. Um eine satellitenunabhängige Positionsbestimmung durchführen zu können, enthält das Navigationssystem ferner einen Richtungssensor 7 und einen Wegsensor 8, die ebenfalls mit der CPU 1 verbunden sind, so daß mit Hilfe eines geeigneten Programmes mit diesen Signalen eine Positionsbestimmung möglich ist. Ein solches Navigationssystem ist bekannt und bildet nicht den Inhalt der vorliegenden Erfindung. Das in Figur 1 dargestellte Navigationssystem wird hier lediglich beispielhaft erläutert. Die Erfindung ist auch mit anderen Ausgestaltungen von Navigationssystemen einsetzbar, beispielsweise auch mit sogenannten Offboard-Navigationssystemen, bei denen die Zielführungsinformationen von außerhalb in das Fahrzeug übermittelt werden.

In Figur 2 ist die Anzeigeeinheit des Navigationssystems näher dargestellt. Abweichend von der Darstellung wird in der nachfolgenden Beschreibung von einer Anzeigeeinheit mit Negativdarstellung, d.h. helle Symbole auf dunklem Hintergrund, ausgegangen. Die Ausgabeeinheit 3 enthält einen ersten Bereich mit einer in diesem Fall schematisierten Kartendarstellung, die die Straßen 9, 10, 11 sowie die Fahrzeugposition 12 zeigt. In einem weiteren Bereich wird durch einen Pfeil 13 die Fahrtrichtung, bzw. ein bevorstehendes Abbiegen angezeigt. Bei der Kartendarstellung und/oder der Pfeildarstellung handelt es sich um Informationen die für den Fahrer während der Fahrt zur Zielführung ständig von Interesse sind. Die Anzeigeeinheit 3 weist weitere Anzeigebereiche 14, 15, 16, 17, 18 auf. Im Anzeigebereich 18 wird beispielsweise der aktuelle Wochentag, das aktuelle Datum und die Uhrzeit angezeigt. Die Anzeigebereiche 14, 15, 16, 17 können über die Bedieneinheit angewählt werden. Bei Anwahl des Anzeigebereichs 14 wird beispielsweise die Eingabe eines Zielortes ermöglicht. Bei Anwahl des Bereichs 15 wird eine vollständige Routenkarte auf der Anzeigeeinheit 3 dargestellt. Bei Anwahl des Bereichs 16 wird eine neue Routenberechnung vorgenommen und bei Anwahl des Bereichs 17 werden weitere Informationen auf der Anzeigeeinheit 3 dargestellt. Durch Auswahl eines der Anzeigebereiche 14 bis 17 kann beispielsweise auch eine weiteres Untermenü aufgerufen werden. Die Anzeigebereiche 14 bis 18 sind für den Fahrer in der Regel nur vor oder zu Beginn einer Fahrt von Interesse, beispielsweise um den Zielort einzugeben oder eine Routenberechnung durchzuführen. Bei einem erfindungsgemäßen Navigationssystem werden daher einige oder alle der Ausgabebereiche 14 bis 18 nach Ablauf einer vorgegebenen Zeitdauer nach der letzten Eingabe über die Bedieneinheit 2 in ihrer Helligkeit reduziert. Vorzugsweise erfolgt dies soweit, dass die Helligkeit der in diesen Anzeigebereichen dargestellten Informationen nur noch geringfügig über der Hintergrundhelligkeit liegt, so dass die Informationen zwar noch erkennbar sind, aber gegenüber der Kartendarstellung deutlich in den Hintergrund treten. Die Bestimmung der Zeitdauer seit dem Betätigen der Bedieneinheit 2 sowie der Vergleich mit einem Vorgabewert wird softwaremäßig in der CPU 1 durchgeführt. Abhängig von diesem Vergleich liefert die CPU 1 entsprechende Ausgangssignale für die Anzeigeeinheit 3, wobei in der Regel zwischen der CPU 1 und der Anzeigeeinheit 3 noch entsprechende Treiber oder dergleichen zwischengeschaltet sind.

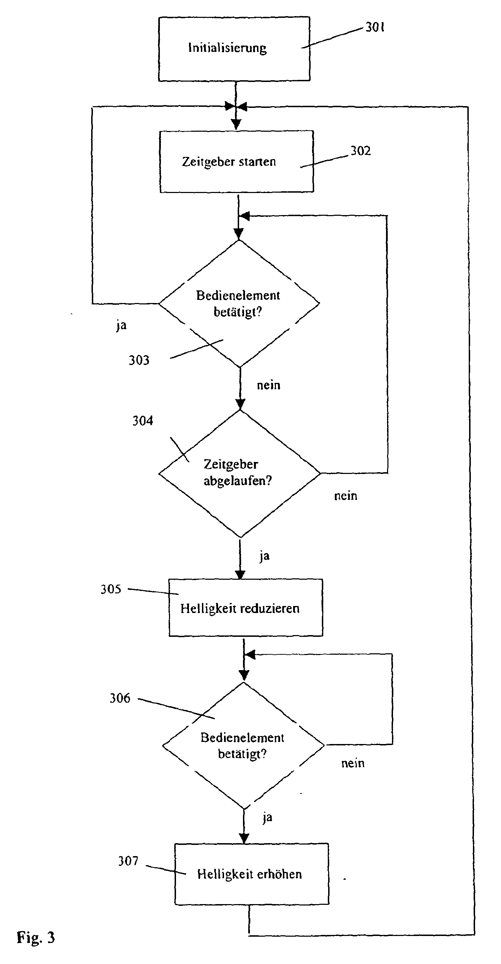

In Figur 3 ist ein Ablaufplan für entsprechende Verfahren beispielhaft dargestellt. Nach einer Initialisierungsphase in Schritt 301 wird in Schritt 302 ein Zeitgeber gestartet. Es erfolgt regelmäßig in Schritt 303 eine Abfrage, ob ein Bedienelement der Bedieneinheit 2 betätigt wurde. Wurde ein Bedienelement betätigt, so startet der Zeitgeber von neuem. Wurde dagegen kein Bedienelement betätigt, so erfolgt in Schritt 304 eine Abfrage, ob der Zeitgeber abgelaufen ist, das heißt, ob die Zeitdauer seit dem letzten Betätigen eines Bedienelementes größer ist als der Vorgabewert. Die Schritte 303 und 304 werden ständig wiederholt bis in Schritt 304 festgestellt wird, dass der Zeitgeber abgelaufen ist. In diesem Fall wird in Schritt 305 die Helligkeit einzelner vorbestimmter Anzeigebereiche reduziert. Anschließend erfolgt in Schritt 306 wiederum eine Abfrage, ob ein Bedienelement betätigt wurde. Ist dies der Fall, so wird in Schritt 307 die Helligkeit derjenigen Anzeigebereiche wieder erhöht, bei denen die Helligkeit zuvor reduziert wurde. Das Verfahren startet anschließend erneut mit Schritt 302.

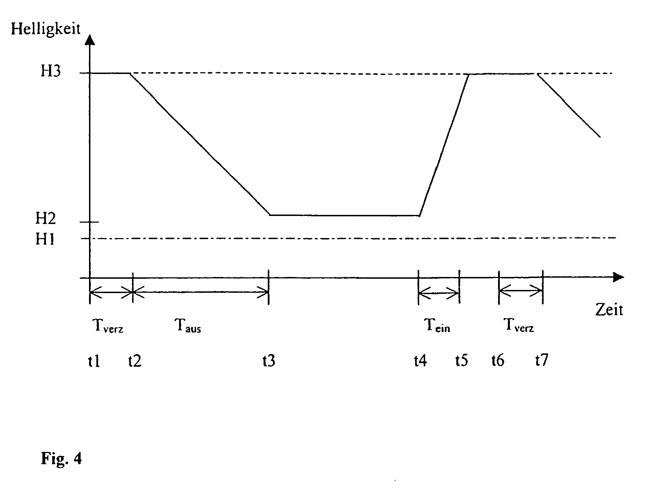

In Figur 4 ist der zeitliche Verlauf der Helligkeit dargestellt, wobei drei Helligkeitsniveaus H1, H2, H3 eingezeichnet sind. Das Helligkeitsniveau H1 ist die Helligkeit des Hintergrundes der Anzeigendarstellung. Mit H3 ist die normale Helligkeit der Anzeige bezeichnet, während H2 die reduzierte Helligkeit der Anzeigebereiche bezeichnet, deren Helligkeit automatisch in Abhängigkeit von der Zeitdauer seit der letzten Betätigung eines Bedienelements veränderbar ist. Die Helligkeitsniveaus können zusätzlich beispielsweise noch für Tag- und Nachtbetrieb unterschiedlich sein.

Zum Zeitpunkt t1 soll die letzte Betätigung eines Bedienelements erfolgt sein, so daß zu diesem Zeitpunkt der Zeitgeber gestartet wird. Der Zeitgeber ist zum Zeitpunkt t2, also nach der Zeitspanne T_{verz}, die dem Vorgabewert entspricht, abgelaufen. Vom Zeitpunkt t2 an wird während der Zeitspanne Tₐᵤₛ die Helligkeit einzelner Anzeigebereiche auf das Helligkeitsniveau H2 reduziert. Zwischen den Zeitpunkten t3 und t4 liegt somit ein Betriebszustand mit zwei konstanten, unterschiedlichen Helligkeitsniveaus für verschiedene Anzeigebereiche vor. Diese Zeitspanne wird mit einer erneuten Betätigung eines Bedienelements der Bedieneinheit zum Zeitpunkt t4 beendet. Die Zeitspanne zwischen den Zeitpunkten t3 und t4 wird im praktischen Betrieb im Vergleich zu den Zeitintervallen Tₐᵤₛ, Tₑᵢₙ oder T_{verz} in der Regel wesentlich größer sein als aus Vereinfachungsgründen in Figur 4 dargestellt. Nach dem erneuten Betätigen eines Bedienelements zum Zeitpunkt t4 wird anschließend die Helligkeit der Anzeigebereiche mit zuvor reduzierter Helligkeit wieder angehoben. Dies erfolgt während der Zeitspanne Tₑᵢₙ und zwar auf das Helligkeitsniveau H3 der Anzeigebereiche, deren Helligkeit nicht reduziert wurde. Dieser Vorgang ist zum Zeitpunkt t5 abgeschlossen. Das letztmalige Betätigen eines Bedienelements erfolgt dann zum Zeitpunkt t6, der damit von seiner Funktion her dem Zeitpunkt t1 entspricht. An den Zeitpunkt t6 schließt sich daher wieder die Verzögerungszeitspanne T_{verz} mit daran anschließender Verringerung der Helligkeit ab dem Zeitpunkt t7 an.

Die Erfindung wurde anhand eines speziellen Navigationssystems näher erläutert. Jedoch ist weder die spezielle Ausgestaltung des Navigationssystems noch die im Ausführungsbeispiel genannte spezielle Art der Informationen auf der Ausgabeeinheit als Beschränkung anzusehen. Vielmehr kann es sich um jede elektronische Einrichtung mit optischer Anzeigefunktion handeln, bei der eine ähnliche optische Gewichtung unterschiedlicher Anzeigebereiche gewünscht wird.

## Patentansprüche

1. Elektronische Einrichtung mit einer optischen Anzeigeeinheit, die mehrere Anzeigebereiche aufweist, einer Bedieneinheit, Mitteln zur Verarbeitung von Eingabebefehlen, die über die Bedieneinheit eingegeben werden, sowie Mitteln zur Ansteuerung der Anzeigeeinheit, wobei weiterhin Mittel zur Bestimmung der Zeitdauer seit der letzten Betätigung der Bedieneinheit (2) und zum Vergleich dieser Zeitdauer mit einem Vorgabewert sowie Mittel zur automatischen Veränderung des Kontrasts einzelner, weniger wichtiger Anzeigebereiche der Anzeigeeinheit (3) vorhanden sind und die automatische Veränderung des Kontrasts der einzelnen Anzeigebereiche der Anzeigeeinheit in Abhängigkeit vom Ergebnis des Vergleichs der Zeitdauer seit der letzten Betätigung der Bedieneinheit mit dem Vorgabewert erfolgt, **dadurch gekennzeichnet, dass** es sich bei der elektronischen Einrichtung um eine elektronische Einrichtung für ein Kraftfahrzeug handelt, die derart ausgeführt ist, dass die Veränderung des Kontrasts der einzelnen, weniger wichtigen Anzeigebereiche nur bei eingeschaltetem Fahrlicht des Kraftfahrzeuges zur besseren Unterscheidung zwischen ständig wichtigen und den weniger wichtigen Anzeigebereichen bei Nachtfahrten erfolgt.

2. Elektronische Einrichtung nach Anspruch 1, **dadurch gekennzeichnet, dass** eine automatische Reduzierung des Kontrasts einzelner Anzeigebereiche erfolgt, wenn die Zeitdauer seit der letzten Betätigung der Bedieneinheit (2) den Vorgabewert überschreitet.

3. Elektronische Einrichtung nach einem der vorhergehenden Ansprüche, **dadurch gekennzeichnet, dass** es sich bei der elektronischen Einrichtung um eine Anzeigeeinheit mit Positivdarstellung handelt und zur Reduzierung des Kontrasts eine Erhöhung der Helligkeit von dargestellten Zeichen oder Symbolen erfolgt.

4. Elektronische Einrichtung nach einem der vorhergehenden Ansprüche 1 oder 2, **dadurch gekennzeichnet, dass** es sich bei der elektronischen Einrichtung um eine Anzeigeeinheit mit Negativdarstellung handelt und zur Reduzierung des Kontrasts eine Reduzierung der Helligkeit von dargestellten Zeichen oder Symbolen erfolgt.

5. Elektronische Einrichtung nach einem der vorhergehenden Ansprüche, **dadurch gekennzeichnet, dass** bei reduziertem Kontrast nach einem erneuten Betätigen der Bedieneinheit (2) eine Erhöhung des Kontrasts erfolgt.

6. Elektronische Einrichtung nach Anspruch einem der vorhergehenden Ansprüche, **dadurch gekennzeichnet, dass** die Reduzierung und/oder die Erhöhung des Kontrasts allmählich erfolgt.

7. Elektronische Einrichtung nach einem der vorhergehenden Ansprüche, **dadurch gekennzeichnet, dass** die Reduzierung des Kontrasts langsamer erfolgt als die Erhöhung des Kontrasts.

8. Elektronische Einrichtung nach einem der vorhergehenden Ansprüche, **dadurch gekennzeichnet, dass** es sich bei der elektronischen Einrichtung um einen Bordcomputer oder ein Navigationssystem handelt.

9. Elektronische Einrichtung nach einem der vorhergehenden Ansprüche, **dadurch gekennzeichnet, dass** es sich bei den Anzeigebereichen, deren Kontrast automatisch in Abhängigkeit von der Zeitdauer seit der letzten Betätigung der Bedieneinheit (2) verändert wird, um Auswahlmenüs oder Eingabefelder handelt.

10. Elektronische Einrichtung nach einem der vorhergehenden Ansprüche, **dadurch gekennzeichnet, dass** es sich bei den Anzeigebereichen, deren Kontrast automatisch in Abhängigkeit von der Zeitdauer seit der letzten Betätigung der Bedieneinheit verändert wird, um Straßen einer untergeordneten Kategorie in einer Kartendarstellung handelt.

## Claims

1. Electronic device having a visual display unit which has a plurality of display areas, an operator control unit, means for processing input commands which are input using the operator control unit, and means for actuating the display unit, wherein there are also means for determining the period of time since the operator control unit (2) was last operated and for comparing this period of time with a preset value and also means for automatically altering the contrast of individual, less important display areas of the display unit (3), and the contrast of the individual display areas of the display unit is automatically altered on the basis of the result of the comparison between the period of time since the operator control unit was last operated and the preset value, **characterized in that** the electronic device is an electronic device for a motor vehicle, which device is designed such that the contrast of the individual, less important display areas is altered only when the motor vehicle's dipped headlights are switched on in order to better distinguish between constantly important display areas and the less important display areas during journeys at night.

2. Electronic device according to Claim 1, **characterized in that** the contrast of individual display areas is automatically reduced if the period of time since the operator control unit (2) was last operated exceeds the preset value.

3. Electronic device according to one of the preceding claims, **characterized in that** the electronic device is a display unit with positive display, and the contrast is reduced by increasing the brightness of displayed characters or symbols.

4. Electronic device according to one of the preceding Claims 1 and 2, **characterized in that** the electronic device is a display unit with negative display, and the contrast is reduced by reducing the brightness of displayed characters or symbols.

5. Electronic device according to one of the preceding claims, **characterized in that** with the contrast reduced, renewed operation of the operator control unit (2) is followed by the contrast being increased.

6. Electronic device according to one of the preceding claims, **characterized in that** the contrast is reduced and/or increased gradually.

7. Electronic device according to one of the preceding claims, **characterized in that** the contrast is reduced more slowly than the contrast is increased.

8. Electronic device according to one of the preceding claims, **characterized in that** the electronic device is an on-board computer or a navigation system.

9. Electronic device according to one of the preceding claims, **characterized in that** the display areas whose contrast is automatically altered on the basis of the period of time since the operator control unit (2) was last operated are selection menus or input fields.

10. Electronic device according to one of the preceding claims, **characterized in that** the display areas whose contrast is automatically altered on the basis of the period of time since the operator control unit was last operated are roads in a subordinate category in a map display.

## Revendications

1. Dispositif électronique ayant une unité d'affichage optique comportant plusieurs zones d'affichage, une unité de commande, des moyens permettant de traiter des instructions de saisie, qui sont entrées par l'intermédiaire de l'unité de commande, ainsi que des moyens permettant de commander l'unité d'affichage, alors que, en outre, il existe des moyens permettant de déterminer la période de temps écoulée depuis la dernière manoeuvre de l'unité de commande (2) et de comparer cette période de temps à une valeur de référence, ainsi que des moyens permettant de modifier automatiquement le contraste de certaines zones d'affichage de moindre importance de l'unité d'affichage (3) et où la modification automatique du contraste de ces certaines zones d'affichage de l'unité d'affichage est effectuée en fonction du résultat de la comparaison de la période de temps écoulée depuis la dernière manoeuvre de l'unité de commande à la valeur de référence, **caractérisé par le fait que** le dispositif électronique est un dispositif électronique pour véhicule automobile qui est conçu de manière telle que la modification du contraste des certaines zones d'affichage de moindre importance n'a lieu que si les phares du véhicule automobile sont allumés pour permettre, pendant les voyages de nuit, de mieux faire la distinction entre les zones d'affichage qui sont en permanence importantes et les zones d'affichage de moindre importance.

2. Dispositif électronique selon la revendication 1, **caractérisé par le fait qu'**il se produit une réduction automatique du contraste de certaines zones d'affichage lorsque la période de temps écoulée depuis la dernière manoeuvre de l'unité de commande (2) est supérieure à la valeur de référence.

3. Dispositif électronique selon l'une des revendications précédentes, **caractérisé par le fait que** le dispositif électronique est une unité d'affichage à affichage positif et que, pour la réduction du contraste, il se produit une augmentation de la luminosité de signes et de symboles représentés.

4. Dispositif électronique selon l'une des revendications précédentes 1 ou 2, **caractérisé par le fait que** le dispositif électronique est une unité d'affichage à affichage négatif et que, pour la réduction du contraste, il se produit une réduction de la luminosité de signes et de symboles représentés.

5. Dispositif électronique selon l'une des revendications précédentes, **caractérisé par le fait que**, lorsque le contraste est réduit, il se produit une augmentation du contraste dès qu'une nouvelle manoeuvre de l'unité de commande (2) a lieu.

6. Dispositif électronique selon l'une des revendications précédentes, **caractérisé par le fait que** la réduction et/ou l'augmentation du contraste ont lieu d'une façon graduelle.

7. Dispositif électronique selon l'une des revendications précédentes, **caractérisé par le fait que** la réduction du contraste a lieu plus lentement que l'augmentation du contraste.

8. Dispositif électronique selon l'une des revendications précédentes, **caractérisé par le fait que** le dispositif électronique est un ordinateur de bord ou un système de navigation.

9. Dispositif électronique selon l'une des revendications précédentes, **caractérisé par le fait que** les zones d'affichage, dont le contraste est modifié automatiquement en fonction de la période de temps écoulée depuis la dernière manoeuvre effectuée sur l'unité de commande (2), sont des menus de sélection ou des champs de saisie.

10. Dispositif électronique selon l'une des revendications précédentes, **caractérisé par le fait que** les zones d'affichage, dont le contraste est modifié automatiquement en fonction de la période de temps écoulée depuis la dernière manoeuvre effectuée sur l'unité de commande, sont des routes de catégorie subordonnée dans une représentation cartographique.
